(19)

Europäisches Patentamt
European Patent Office
Office européen des brevets

(11) **EP 2 418 507 A1**

(12) **EUROPEAN PATENT APPLICATION**

(43) Date of publication:
**15.02.2012 Bulletin 2012/07**

(51) Int Cl.:
***G01S 7/52*** *(2006.01)*     ***G01S 15/93*** *(2006.01)*
***G01S 15/04*** *(2006.01)*

(21) Application number: **11006541.4**

(22) Date of filing: **09.08.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **11.08.2010 US 854327**

(71) Applicant: **Elekta AB (PUBL)
103 93 Stockholm (SE)**

(72) Inventors:
• **Humphrey, Malcolm
  Horsham, West Sussex, RH12 2NU (GB)**
• **Bourne, Duncan
  Mersham, Redhill, Surrey RH1 3BA (GB)**

(74) Representative: **Hall, Christopher David et al
Fry Heath Spence LLP
The Gables
Massetts Road
Horley RH6 7DQ (GB)**

(54) **sensor array**

(57)     There is provided a sensor array, comprising a pair of transducers, a first transducer, configured to transmit pressure waves; and a second transducer, acoustically coupled to the first transducer, configured to detect pressure waves incident upon the sensor array from the environment. The array further comprises control circuitry, coupled to the first and second transducers, configured to: control the first transducer to transmit pressure waves; simultaneously control the second transducer to monitor the transmission of said pressure waves; and verify correct operation of the array in the event that said pressure waves are detected. The invention therefore provides a sensor array with a failsafe mechanism.

Fig. 1

EP 2 418 507 A1

**Description**

FIELD OF THE INVENTION

The present invention relates to sensor arrays.

BACKGROUND ART

Existing ultrasonic proximity sensors typically consist of a few piezoelectric ceramic transducers, each of which performs both the transmit and receive functions. A short burst of ultrasonic energy is transmitted from the transducer. If the burst hits an object, it will be reflected back towards the transmitting element. If the object is within the sensor's range, then this is received by the transducer as an echo, and the distance to the object can be calculated from the time taken between the transmitted pulse and the received echo.

Traditional ultrasonic proximity sensors rely on a single transducer which performs both the transmit and receive functions (or an array of such transducers). However, this scheme has a number of drawbacks. First, in order to detect echoes the transducer must switch to receive mode as soon as a pulse is transmitted. In practice there is a time delay in switching between the transmit and receive modes of the transducer, however, which translates to a minimum sensing distance. For example, at a transmit frequency of 40 kHz, the minimum sensing distance may be as high as 100 mm, although the minimum sensing distance is also dependent on the type of sensors used and how they are driven. Objects that are closer than the minimum distance create echoes which are incident on the transducer at a time when the receive function is yet to be enabled. These objects are therefore not sensed, potentially leading to collisions.

In addition, it is difficult if not impossible to detect if the sensor array has a fault. For example, consider the situation where one transducer is faulty in its receive function, and therefore fails to report incoming echo signals. This means that when a pulse is sent out and no return signal is registered, it is not possible to tell if this is because there is no object to echo from, or because there is a failure in the transmitter/receiver etc. In the absence of any other indications, a user will assume the sensor is functioning correctly and that there are no nearby objects. He or she will only become aware of a sensor fault at the point of collision with an object.

Ultrasonic proximity sensors are used in a number of different fields. Examples include car-parking sensors in the automotive industry, fill level indicators in agricultural grain silos, and proximity detection in medical devices such as radiotherapy machines (see US patent no 7046765, for example). In all of these technical fields, and particularly the latter, a failure in the proximity sensor can have grave consequences for the user or those nearby, as well as the equipment to which the sensor is attached.

Clearly it is important that any sensor malfunction in these applications is detected as soon as it occurs.

Some devices have separate transmit and receive transducers (see PCT application WO 2009/136196, for example). However, these systems are generally designed to minimize coupling between the transmitter and the receiver, and suffer from the same fault detection problems as single transducer designs.

There is a further problem in that most ultrasonic ranging solutions rely on ceramic piezoelectric transducers. These transducers tend to be relatively high cost, limiting the number of sensors available, and pushing the design towards a single transducer for both transmit and receive. They also have a tendency to resonate or "ring" more than other transducers. This limits the minimum sensing distance as the ringing makes it difficult to distinguish echoes within the detected signals (i.e. the signal to noise ratio is low). Only once the ringing has fallen to an acceptable level is it possible to pick out echo signals from the noise.

SUMMARY OF THE INVENTION

The present invention provides a sensor array, comprising a pair of transducers, a first transducer, configured to transmit pressure waves; and a second transducer, acoustically coupled to the first transducer, configured to detect pressure waves incident upon the sensor array from the environment. The array further comprises control circuitry, coupled to the first and second transducers, configured to: control the first transducer to transmit pressure waves; simultaneously control the second transducer to monitor the transmission of said pressure waves; and verify correct operation of the array in the event that said pressure waves are detected.

The present invention therefore provides a sensor array with a failsafe mechanism. The entire signal chain can be verified without providing many additional components over conventional apparatus. Indeed, the separation of transmit and receive functions to different transducers allows objects that are extremely close to be detected.

In an embodiment, the array further comprises memory, for storing a sample of the second transducer response to the transmission of pressure waves by the first transducer in an environment with no nearby objects. The control circuitry is further configured to: receive detected signals from the second transducer resulting from said pressure waves; subtract said stored sample from said detected signals; and process the signal remaining from said subtraction.

This embodiment therefore provides a sensor array which can compensate for the resonance caused by transmitted pulses, allowing objects that are extremely close to the array to be detected.

The sensory array may have a plurality of such transducer pairs, with each pair being acoustically decoupled from the others.

For ease of manufacture, in one embodiment the transducers comprise a piezoelectric material, such as polyvinylidene fluoride (PVDF) film.

BRIEF DESCRIPTION OF THE DRAWINGS

An embodiment of the present invention will now be described by way of example, with reference to the accompanying figures in which;

Figure 1 is a schematic drawing of a sensor array according to embodiments of the present invention;

Figure 2 is a schematic drawing showing part of the control circuitry according to embodiments of the present invention;

Figure 3 is a flowchart of a method according to an embodiment of the present invention; and

Figure 4 is a flowchart of a method according to another embodiment of the present invention.

DETAILED DESCRIPTION OF THE EMBODIMENTS

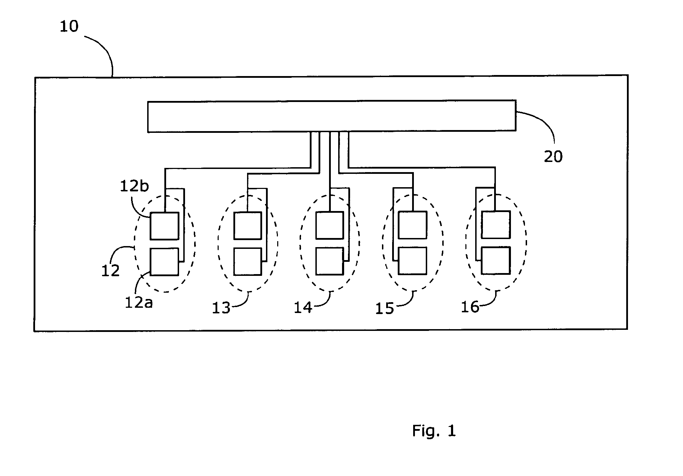

Figure 1 shows a sensor array 10 according to embodiments of the present invention. The array can be used as part of a proximity sensor, but may have uses in other fields such as gesture recognition, for example.

The array 10 comprises a plurality of transducer pairs 12-16, and control circuitry 20 in communication with each of the pairs. Each pair comprises one transducer 12a that is connected to transmit circuitry within the circuitry 20, and another transducer 12b that is connected to receive circuitry within the circuitry 20. In the illustrated embodiment, the transducers 12a, 12b are otherwise identical. However, in other embodiments the array may employ pairs of non-identical transducers specifically adapted to perform transmit and receive functions.

The transducers within each pair are acoustically coupled together, such that a transmission of pressure waves (e.g. ultrasonic waves) from the transmit transducer 12a is detected directly (i.e. without reflecting from a nearby object) by the corresponding receive transducer 12b of that pair. The pairs themselves are acoustically decoupled, however, to the extent that is possible. Thus, the transmission of pressure waves by a transmit transducer 12a in one pair does not result in the direct detection of those pressure waves in receive transducers of other pairs 13-16. Of course, the receive transducers may nonetheless detect echo signals resulting from the transmissions of other transmit transducers.

The transducers can be manufactured from any suitable material known to those skilled in the art. Piezoelectric materials are particularly suitable, due to their ease of manufacture. Of these, polyvinylidene fluoride (PVDF) film exhibits a suitably low ringing effect.

The connections between the transducer pairs 12-16 and control circuitry 20 can be made on a flexible printed circuit board, for example.

In the illustrated embodiment, the pairs 12-16 are arranged side by side in a long, linear array, as this provides the simplest way of acoustically decoupling one transducer pair from the others. Alternative arrangements are contemplated, however. In addition, although five transducer pairs are illustrated in Figure 1, the invention contemplates any number of pairs, including as few as one pair.

In operation, the control circuitry 20 controls the transmit transducers 12a of each pair to transmit bursts of pressure waves (e.g. ultrasonic waves) radiating away from the array 10. The receive transducers 12b listen for echo signals that have reflected off nearby objects, and output these signals to the control circuitry. By determining the time delay between the transmitted pulse and the received echo, the distance to the nearby object can be calculated. In order to transmit energy most efficiently, the transmit transducers 12a can be driven sinusoidally at a frequency equal to their resonant frequency.

The transducer pairs can be operated according to a particular timing scheme, to ensure that the echo signals can be unambiguously related to a particular burst of ultrasonic waves. For example, in one embodiment, the transmit transducers may be pulsed sequentially from one end of the array to the other.

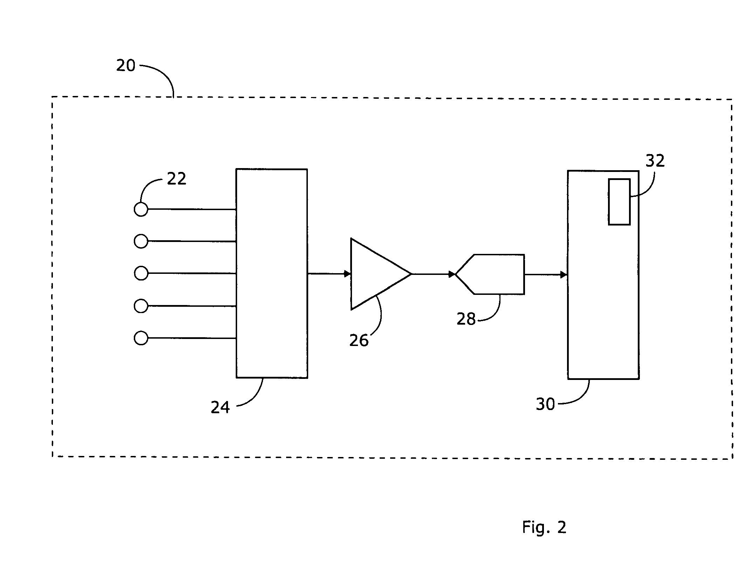

Figure 2 shows further details of the receive circuitry within the control circuitry 20 according to embodiments of the present invention.

The control circuitry 20 comprises a plurality of inputs 22 fort receiving signals from the respective receive transducers 12b. Each input is provided to a multiplexer 24, which generates a corresponding multiplexed signal, for example, using time division multiplexing. The multiplexed signal is provided to a low noise amplifier 26, and the amplified output converted to digital with a high-speed analogue-to-digital converter 28. The digital signal is then provided to a digital signal processor (DSP) 30 for processing.

The DSP 30 may perform many functions. For example, the signal processor 26 may determine the distance of the array from a nearby object by measuring the time between a pulse being transmitted and an echo signal being detected. In order to improve its detection capability, the DSP 30 may access a memory bank 32 of stored nominal signal responses, and subtract the detected signal from the stored signal. The memory 32 may be on board (as illustrated) or external. The stored signals are previously recorded samples of the receive transducer 12b responses to the transmission of pressure waves by the transmit transducer 12a in an environment without nearby objects. That is, the transmission of pressure waves by the transmit transducer 12a of a pair causes an initial detection of those pressure waves and/or of vibrations transmitted via the acoustic coupling between the transmitter and receiver by the corresponding receive transducer 12b. It is also common for the transmit transducer to "ring" for a period of time after it is initially driven. This ringing is detected by the receive transducer, and can interfere with detection of incoming echo signals. The difference between the recorded response and the real-time detected signal should therefore show the echo signals more clearly.

The algorithm is set out below:

$$\text{voltage\_recorded}[n] - \text{voltage\_incoming}[n] = \text{ring\_cancelled response }[n],$$

where n is the time (or clock cycles) between the sample time and the transmit pulse.

The detected response can be expected to change gradually over time, as the transmitters and receivers age. The control circuitry therefore periodically re-records the response at times when no object is nearby.

This operation may be performed by the processor 30 itself, using its memory 32. The processor 30 may use the number of pulses in the echo signal, as well as the frequency, to discriminate what is a valid echo and what is noise after the ringing has been cancelled out. If no valid echo signals are detected, the memory can be updated with the new stored signal. Alternatively, the response may be re-recorded during self-test steps when the device is initialised.

The memory 32 may store recorded samples for each receive transducer.

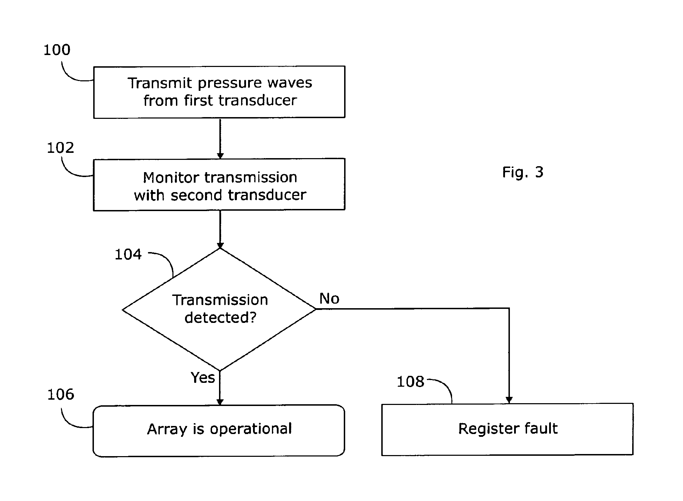

Figure 3 is a flowchart of a method according to embodiments of the present invention.

The method starts in step 100, in which the transmit transducer 12a of a pair is controlled to transmit a burst of pressure waves. This can be implemented as part of an error detection mode or during normal operation of the sensor array.

In step 102, the receive transducer 12b is activated to monitor the transmission of step 100. As previously described, the receive transducer is acoustically coupled to the transmit transducer, and thus receives the transmitted pressure waves directly. The goal of the receive transducer in this step is not to detect echo signals from a nearby object (which would be received after a time delay proportional to the distance of the object), but to detect whether the pressure waves were transmitted at all. Therefore this step may take place simultaneously with step 100.

In step 104, the control circuitry 20 determines whether a transmission was detected. If a transmission was detected, the transmit transducer 12a and the receive transducer 12b are both deemed to be functioning correctly (step 106). If no transmission is detected, this could be because the receive transducer and/or the transmit transducer are faulty, and the fault can be reported to a controller of the system, for example (step 108).

In order to detect faults, the processor 30 may look at both the magnitude and the time of the ringing, as well as its frequency to determine that the signal chain is working correctly. The direct response from the transmission is typically orders of magnitude larger than any echo response or other incoming signal. Under ordinary operational conditions, the response varies only by a small amount. If there were any faults in the signal chain, however, the response would vary substantially, much more than any change due to an echo of a nearby object. A fault would most likely result in substantial reduction or complete loss of the echo response.

The present invention therefore provides a sensor array with a failsafe mechanism. The entire signal chain can be verified without providing many additional components over conventional apparatus. Indeed, the separation of transmit and receive functions to different transducers allows objects that are extremely close to be detected. This has particular merit in technical fields where collision avoidance is of paramount importance, such as radiotherapy for example. Thus, the present invention also provides for a radiotherapy apparatus comprising a proximity sensor as described above.

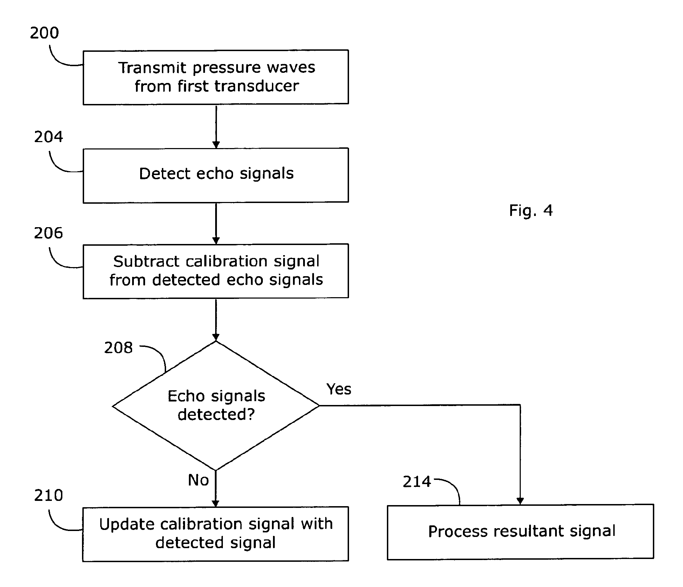

Figure 4 is a flowchart of a method of operating the sensor array 1 according to an embodiment of the invention.

The method starts in step 200, where the first transducer 12a is driven to transmit a pulse of pressure waves.

In step 204, signals are detected by the receive transducer. These detected signals will typically include the response of the receive transducer to the transmissions themselves, i.e. the ringing, and may also include echo signals reflected from nearby objects.

In step 206, the recorded calibration signal is subtracted from the detected signal. The difference is then processed to detect the presence of echo signals (step 208). If there are no echoes, it can be assumed that there are no objects in the vicinity, i.e. that the detected signal represented the receive transducer's response to the ringing only. In that case, the recorded signal is replaced with the detected signal in step 210.

If the difference signal contains echo signals, the recorded signal is not updated, and the difference signal is processed (step 214) as usual, for example to determine the distance to the object.

This embodiment therefore compensates for the resonance caused by transmitted pulses, allowing objects that are extremely close to the array to be detected. In addition, this compensation can be continuously updated by intelligently recording the response when no objects are present in the vicinity, thus allowing for drift in the transmit and receive transducer responses.

It will of course be understood that many variations may be made to the above-described embodiment without departing from the scope of the present invention.

**Claims**

1. A sensor array, comprising:

   a pair of transducers, comprising:

   a first transducer, configured to transmit pressure waves; and
   a second transducer, acoustically coupled to the first transducer, configured to detect pressure waves incident upon the sensor array from the environment; and

   control circuitry, coupled to the first and second transducers, configured to:

   i. control the first transducer to transmit pressure waves;
   ii. simultaneously control the second transducer to monitor the transmission of said pressure waves; and
   iii. verify correct operation of the array in the event that said pressure waves are detected.

2. The sensor array according to claim 1, further comprising:

   memory, for storing a sample of a previous response of the second transducer to the transmission of pressure waves by the first transducer;
   wherein the control circuitry is further configured to:

   iv. receive detected signals from the second transducer resulting from said pressure waves;
   v. subtract said stored sample from said detected signals; and
   vi. process the signal remaining from said subtraction.

3. The sensor array according to claim 1 or 2, wherein the first transducer is configured to transmit ultrasonic pressure waves, and wherein the second transducer is configured to detect ultrasonic pressure waves.

4. The sensor array according to any one of the preceding claims, further comprising further pairs of transducers, each pair comprising corresponding first and second transducers.

5. The sensor array according to claim 4, wherein said pairs of transducers are acoustically decoupled from each other.

6. The sensor array according to any one of the preceding claims, wherein said first and second transducers comprise a piezoelectric material.

7. The sensor array according to claim 6, wherein said piezoelectric film is polyvinylidene fluoride (PVDF) film.

8. A proximity sensor, comprising a sensor array as claimed in any one of the preceding claims.

9. A radiotherapy apparatus, including a proximity sensor as claimed in claim 8.

10. A method of operating a sensor array, the sensor array comprising a first transducer and a second transducer acoustically coupled to the first transducer, the second transducer configured to detect pressure waves incident upon the sensor array from the environment, the method comprising:

transmitting pressure waves using said first transducer;
simultaneously monitoring said transmission of pressure waves using said second transducer; and
verifying correct operation of the array in the event that said pressure waves are detected.

**11.** The method according to claim 10, further comprising:

receiving detected signals from the second transducer resulting from said transmitted pressure waves;
subtracting a stored sample of the second transducer response to the transmission of pressure waves by the first transducer in an environment with no nearby objects; and
processing the remainder of said subtraction.

Fig. 1

Fig. 2

100

Transmit pressure waves
from first transducer

102

Monitor transmission
with second transducer

Fig. 3

104

Transmission
detected?

No

Yes

106

Array is operational

108

Register fault

200

Transmit pressure waves
from first transducer

204

Detect echo signals

Fig. 4

206

Subtract calibration signal
from detected echo signals

208

Echo signals
detected?

Yes

No

214

210

Update calibration signal with
detected signal

Process resultant signal

Europäisches
Patentamt

European
Patent Office

Office européen
des brevets

# EUROPEAN SEARCH REPORT

**Application Number**

EP 11 00 6541

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/071255 A1 (OKUDA YASUYUKI [JP] ET AL) 19 March 2009 (2009-03-19) | 1,3-10 | INV.<br>G01S7/52<br>G01S15/93 |
| Y | * abstract; figures 1A,1B,3A,3B,3C,9 *<br>* paragraph [0026] - paragraph [0027] *<br>* paragraph [0042] - paragraph [0044] *<br>* paragraph [0069] *<br>----- | 2,11 | ADD.<br>G01S15/04 |
| Y | US 5 969 667 A (FARMER MICHAEL E [US] ET AL) 19 October 1999 (1999-10-19)<br>* abstract *<br>----- | 2,11 | |
| X | US 2009/207006 A1 (RICHTER KARL-HEINZ [DE] ET AL) 20 August 2009 (2009-08-20)<br>* abstract; figure 3 *<br>* paragraph [0016] *<br>* paragraph [0019] *<br>----- | 1,3,4,<br>6-8,10 | |
| X | US 2010/067324 A1 (PREISSLER PETER [DE]) 18 March 2010 (2010-03-18)<br>* abstract; figures 1,6 *<br>* paragraph [0018] *<br>* paragraph [0029] - paragraph [0030] *<br>----- | 1,3,4,6,<br>7,10 | TECHNICAL FIELDS SEARCHED (IPC) |
| X | US 2008/232197 A1 (KOJIMA KIYONARI [JP] ET AL) 25 September 2008 (2008-09-25)<br>* figures 13,17,19 *<br>* paragraph [0129] *<br>----- | 1,3,6,8,<br>10 | G01S<br>G01V |

The present search report has been drawn up for all claims

| Place of search | Date of completion of the search | Examiner |
|---|---|---|
| The Hague | 18 November 2011 | Niemeijer, Reint |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 00 6541

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2011

| Patent document cited in search report | | Publication date | Patent family member(s) | | Publication date |
|---|---|---|---|---|---|
| US 2009071255 | A1 | 19-03-2009 | DE 102008001746 | A1 | 24-12-2008 |
| | | | JP 4367533 | B2 | 18-11-2009 |
| | | | JP 2008309512 | A | 25-12-2008 |
| | | | US 2009071255 | A1 | 19-03-2009 |
| US 5969667 | A | 19-10-1999 | NONE | | |
| US 2009207006 | A1 | 20-08-2009 | CN 101147083 | A | 19-03-2008 |
| | | | DE 102005013589 | A1 | 28-09-2006 |
| | | | EP 1864156 | A1 | 12-12-2007 |
| | | | US 2009207006 | A1 | 20-08-2009 |
| | | | WO 2006100193 | A1 | 28-09-2006 |
| US 2010067324 | A1 | 18-03-2010 | CN 101300503 | A | 05-11-2008 |
| | | | DE 102005052633 | A1 | 10-05-2007 |
| | | | EP 1946143 | A1 | 23-07-2008 |
| | | | US 2010067324 | A1 | 18-03-2010 |
| | | | WO 2007051665 | A1 | 10-05-2007 |
| US 2008232197 | A1 | 25-09-2008 | DE 102007039598 | A1 | 03-04-2008 |
| | | | US 2008232197 | A1 | 25-09-2008 |

EPO FORM P0459

For more details about this annex : see Official Journal of the European Patent Office, No. 12/82

## REFERENCES CITED IN THE DESCRIPTION

**Patent documents cited in the description**

- US 7046765 B
- WO 2009136196 A